# EUROPEAN PATENT APPLICATION

(11) **EP 3 521 662 A1**
(43) Date of publication of application: **07.08.2019**
(21) Application number: 17855582.7
(22) Date of filing: 04.09.2017
(51) Int. Cl.: F16H 57/04

(54) **LUBRICATING DEVICE FOR TRANSMISSION**

(30) Priority: 27.09.2016 JP 2016187738
(71) Applicant: Aisin AI Co., Ltd., Nishio-shi, Aichi 445-0006 (JP)
(72) Inventor: ICHIKAWA Masaya, Nishio-shi Aichi 445-0006 (JP); OSAWA Hideya, Nishio-shi Aichi 445-0006 (JP)
(74) Representative: TBK
(86) International application number: PCT/JP2017/031707
(87) International publication number: WO 2018/061624

(57) **Abstract**

This lubricating device (10) for a transmission comprises: a first gear (40) located at one of the front end and the rear end of a power transmission shaft (30); a second gear (50) located at the other end of the power transmission shaft (30) at a position opposite the first gear (40); and an oil separator (60) disposed below the first gear (40) and the second gear (50) so as to extend in the front-rear direction of the power transmission shaft (30) and provided with an inner wall. The oil separator (60) is provided with a downwardly sloped flow path (66) which is provided on the inner wall of the oil separator (60) so as to be sloped downward toward the one end of the power transmission shaft (30) from the other end of the power transmission shaft (30), receives lubricating oil splashed up by the second gear (50), and allows the lubricating oil to flow into a first gear cover section (62).

## Description

### [Technical Field]

This invention relates to a lubricating device for a transmission and more particularly to a lubricating device for transmission having an oil separator which encloses the lower part of the power transmission gear wheels which scoops up the lubrication oil.

### [Background Art]

Generally, a lubrication oil is sealed in the casing for lubricating necessary portions of the vehicle transmission. The sealed lubrication oil is reserved in the lower portion (of the casing) by influence of gravity. By using the power transmission gear wheels which scoop up the lubrication oil reserved in the lower portion of the casing by rotation to thereby scatter the reserved lubrication oil over to the portions necessary for lubrication. Such portions are normally not directly immersed in the lubrication oil. However, when the vehicle stops or operated at a low speed, most of the lubrication oil gathers in the lower portion and the power transmission gear wheels are immersed in the oil to receive a large stirring resistance. In order to reduce such stirring resistance, for example, in Patent Literature 1, an oil separator is disposed in the casing. The oil separator extends in an axis direction of the power transmission shaft to enclose the lower part of the power transmission gear wheels which scoop up the lubrication oil.

Further, for example, in a transmission which is positioned in a rear side lowered arrangement, if the vehicle is running on an up-hill road, the transmission is positioned in further lowered position at the rear side. This may cause a deficiency in scooping up the lubrication oil at the front side of the power transmission shaft, i.e., a front side of the oil separator because of the downward shifting of the oil surface of the lubrication oil and a deficiency of lubrication at the portions necessary for lubrication becomes remarkable. In order to make up for such lowering of the oil surface at the front side of the oil separator, the Patent Literature 1 discloses the guide ribs formed on the outer peripheral surface of the oil separator as a dam by the guide ribs so that among the oil surfaces of the lubrication oil at the outside of the separator, the oil surface at the front side (oil introducing side) in a rotational direction of the power transmission shaft is raised more than the oil surface at the rear side (oil scooping side) in the rotational direction of the power transmission shaft due to the damming effect. Further, the structure that the upper brim portion of the front side of the oil separator which is lowered more than the other upper brim portions is disclosed. By this structure, the lubrication oil which oil surface is raised at the outside of the oil separator due to the damming effect can flow in on a priority basis from the lower side upper brim portion of the oil separator, i.e., the upper brim portion of the front side of the oil separator. Accordingly, the lowered oil surface of the lubrication oil at the inside of the front side of the oil separator can be complemented or supplemented.

### [Citation List]

### [Patent Literature]

Patent Document 1: JP2010-223278A

### [Summary of Invention]

### [Technical Problem(s)]

However, according to the lubricating device for a transmission disclosed in the Patent Literature 1, the oil surface of the lubrication oil reserved outside of the oil separator is raised by the damming effect of the guide ribs provided at the outer peripheral surface of the oil separator and then the dammed lubrication oil is necessary to be introduced into the inside of the oil separator at front side from the upper brim portion of the oil separator. Thus, it takes a time to sufficiently raise the oil surface of the lubrication oil by the damming effect. Accordingly, an improved lubricating device for a transmission has been desired that can make up for the reduced oil surface of the lubrication oil which is scooped up by the power transmission gear wheels at the inside of the oil separator without utilizing the damming effect.

The present invention was made in consideration with the above drawbacks and an object of the invention is to provide a lubricating device for a transmission which can complement the lowering of the oil surface of the lubrication oil which is scooped up by the power transmission gear wheels by the lubrication oil reserved inside of the oil separator.

### [Solution to Problem(s)]

The lubricating device for a transmission associated with the invention includes a casing in which a lubrication oil for the transmission is sealed, a power transmission shaft disposed along in a front/rear direction of the transmission and supported in the casing for transmitting power, a plurality of power transmission gear wheels arranged on the power transmission shaft at positions different from each other in the front/rear direction of the power transmission shaft and an oil separator arranged at a lower side of the plurality of power transmission gear wheels along in the front/rear direction of the power transmission shaft and having an inner wall. The oil separator includes a first gear wheel cover portion which encloses a lower side of a first gear wheel among the plurality of power transmission gear wheels positioned at one side of a front side and a rear side of the power transmission shaft and which reserves the lubrication oil scooped up by the first gear wheel and falling down along the inner wall of the oil separator, a second gear wheel cover portion which encloses a lower part of a second gear wheel among the plurality of power transmission gear wheels positioned at the other side of the front side and the rear side of the power transmission shaft relative to the first gear wheel and which reserves the lubrication oil scooped up by the second gear wheel and falling down along the inner wall of the oil separator and a descending sloped fluid passage which is provided on the inner wall of the oil separator, sloped downward from the other side of the power transmission shaft to the one side thereof, accepting a scooped lubrication oil scooped up by the second gear wheel and introducing the scooped up lubrication oil into the first gear wheel cover portion.

### [Advantageous effects]

According to the structure explained above, the lubrication oil is directly introduced from the second gear wheel cover portion to the first gear wheel cover portion by means of the descending sloped fluid passage provided on the inner wall of the oil separator. Accordingly, the lowering of the oil surface of the lubrication oil scooped up by the power transmission wheel can be complemented by the lubrication oil reserved inside of the oil separator. In more concrete, for example, when the vehicle is running on an uphill and the transmission is in an inclined positioned in a rear side lowered or the vehicle is running on a downhill and the transmission is in an inclined positioned in a front side lowered, the lowering of the oil surface of the lubrication oil at the first gear wheel cover portion positioned at the upper side relative to the second gear wheel cover portion can be complemented.

### [Brief Description of Drawings]

Fig. 1 is a partial cross-sectional view schematically showing a transmission to which the lubricating device for a transmission according to the invention is adapted;
Fig. 2 is a partial cross-sectional view showing the transmission being on an uphill road;
Fig. 3 is a partial perspective view showing an embodiment of the lubricating device for a transmission according to the invention;
Fig. 4 is a partial perspective view showing an oil separator of the lubricating device for a transmission shown in Fig. 3;
Fig. 5 is an enlarged view of portion "A" in Fig. 4; and
Fig. 6 is a partial cross-sectional view showing an operation of a descending sloped fluid passage which is provided on the oil separator.

### [Description of Embodiments]

One embodiment of the invention will be explained hereinafter with reference to the attached drawings.

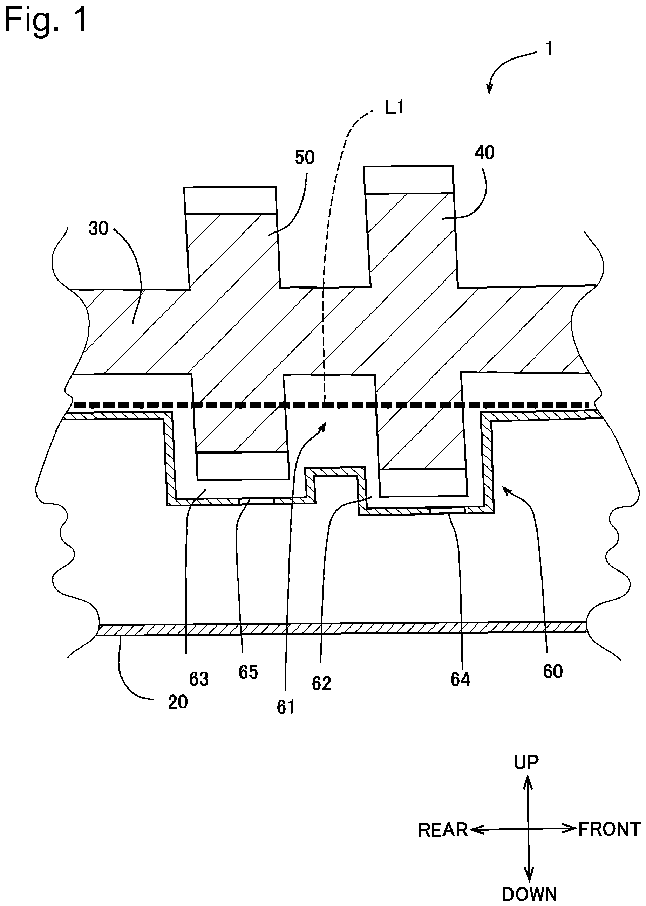

The transmission 1 to which the lubricating device for a transmission of the embodiment of the invention is adopted is arranged, for example, as a vehicle rear side lowered arrangement. As shown in Fig. 1, the transmission 1 includes a casing 20, a power transmission shaft 30, a plurality of power transmission gear wheels (first gear wheel 40 and second gear wheel 50 are shown in Fig. 1) and an oil separator 60. It is noted that Fig. 1 shows a part of the transmission 1 and the casing 20, the power transmission shaft 30 and the oil separator 60 are also shown in part.

The lubrication oil is sealed in the casing 20. The power transmission shaft 30 is arranged along in front/rear direction of the transmission 1 and is supported in the casing 20 to transmit the power. The power transmission shaft 30 includes an input shaft, an output shaft, a counter shaft arranged in parallel with the input shaft and a reverse idler shaft for reverse speed change, in addition to the output shaft of the transmission 1.

Each of the plurality of power transmission gear wheels is positioned at a different position from each other in a front/rear direction of the power transmission shaft 30. The first gear wheel 40 is positioned at either one of the front side and the rear side of the power transmission shaft 30. In the embodiment shown in Fig. 1, the first gear wheel 40 is positioned at the front side of the power transmission shaft 30. On the other hand, the second gear wheel 50 is positioned at the other side of the front side and the rear side of the power transmission shaft 30. In the embodiment shown in Fig. 1, the second gear wheel 50 is positioned at the rear side (further rear side compared to the position of the first gear wheel 40) of the power transmission shaft 30.

It is noted that in Fig. 1, the first gear wheel 40 and the second gear wheel 50 of the power transmission shaft 30 are configured to be rotating as a unit. However, the configuration of the first gear wheel 40 and the second gear wheel 50 of the power transmission shaft 30 is apparently not limited to the configuration shown in Fig. 1.

The oil separator 60 is arranged at the lower side of the first gear wheel 40 and the second gear wheel 50 along in the front/rear direction of the power transmission shaft 30 and is formed with an inner wall 61. The oil separator 60 is provided with a first gear wheel cover portion 62 which encloses the lower side of the first gear wheel 40 and reserves the lubrication oil which is scooped up by the first gear wheel 40 and is falling down along the inner wall 61 of the oil separator 60. Further, the oil separator 60 is provided with a second gear wheel cover portion 63 similarly which encloses the lower side of the second gear wheel 50 and reserves the lubrication oil which is scooped up by the second gear wheel 50 and is falling down along the inner wall 61 of the oil separator 60.

As shown in Fig. 1, a first penetrating hole 64 which guides the lubrication oil in the casing 20 into the first gear wheel cover portion 62 is provided at the first gear wheel cover portion 62 in order to establish communication between inside and outside of the oil separator 60.

Similarly, as shown in Fig. 1, a second penetrating hole 65 which guides the lubrication oil in the casing 20 into the second gear wheel cover portion 63 is provided at the second gear wheel cover portion 63 in order to establish communication between inside and outside of the oil separator 60.

In Fig. 1, the oil surface L1 of the lubrication oil in the casing 20 under a state that the vehicle with the transmission 1 is on a flat road is indicated. The lubrication oil flows into the first gear wheel cover portion 62 and the second gear wheel cover portion 63 via the first penetrating hole 64 and the second penetrating hole 65 from the casing 20 and thus, the first gear wheel cover portion 62 and the second gear wheel cover portion 63 are filled with the lubrication oil. Thus, the first gear wheel 40 and the second gear wheel 50 can scoop up thus introduced lubrication oil to lubricate the lubrication necessary parts.

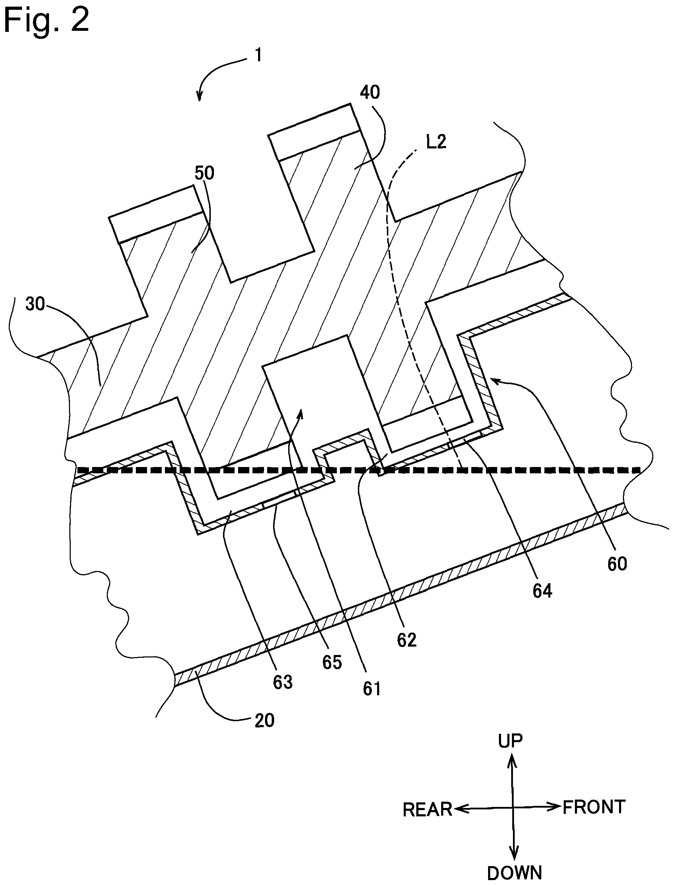

In Fig. 2, the oil surface L2 of the lubrication oil in the casing 20 under a state that the vehicle with the transmission 1 is on an uphill road is indicated. When the vehicle (i.e., the transmission 1) is running on the uphill road, the transmission 1 is inclined in a rear side in a rear side lowered position to a degree depending on the inclination degree of the uphill road. Then the lubrication oil moves towards the rear side of the casing 20. This rear side movement of the lubrication oil lowers the oil surface L2 of the lubrication oil in the first gear wheel cover portion 62 and the second gear wheel cover portion 63 lower than the oil surface L1 shown in Fig. 1.

Accordingly, under the oil surface of the lubrication oil being the level L2, the lubrication oil flows into the second gear wheel cover 63 via the second penetrating hole 65 from the casing 20. However, since the position of the first penetrating hole 64 is formed above the oil surface L2, the lubrication oil cannot flow into the first gear wheel cover 62 via the first penetrating hole 64 from the casing 20. Accordingly, the first gear wheel 40 may not lubricate the lubrication necessary parts due to the insufficiency of lubrication oil to be scooped up.

Next, a lubricating device 10 for a transmission according to an embodiment of the invention will be explained with reference to Figs, 3 through 6. The lubricating device 10 includes a casing 20 similar to the structure of the casing 20 which is shown in Figs. 1 and 2, a power transmission shaft 30, a first gear wheel 40 and a second gear wheel 50 which correspond to a plurality of power transmission gear wheels and an oil separator 60. The same part or component provided as the same member here is referred to as the same reference numerals designated in Figs. 1 and 2.

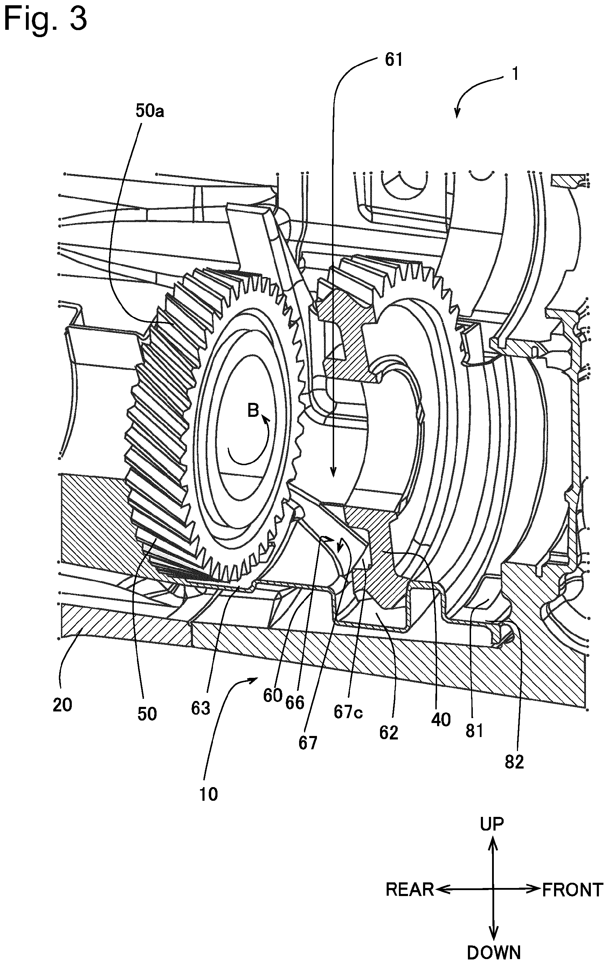

The lubricating device 10 for a transmission according to the invention is provided with a descending sloped fluid passage 66 which is formed with a downward inclination towards either one side of the front side and the rear side of the power transmission shaft 30, i.e., in the example shown in Figs. 3 through 6, towards the front side of the power transmission shaft 30 and from the other side of the front side and the rear side of the power transmission shaft 30, i.e., in the example shown in Figs. 3 through 6, from the rear side of the power transmission shaft 30, on the inner wall 61 of the oil separator 60. The descending sloped fluid passage 66 receives the lubrication oil scooped up by the second gear wheel 50 from the second gear wheel cover portion 63 and guides the scooped up oil to the first gear wheel cover portion 62. The descending sloped fluid passage 66 is formed on a bottom surface of a recessed portion 67 which is provided along from the second gear wheel cover portion 63 to the first gear wheel cover portion 62 at a lower part of a side wall portion 61a of the inner wall 61 of the oil separator 60, at a radially outside of the second gear wheel 50.

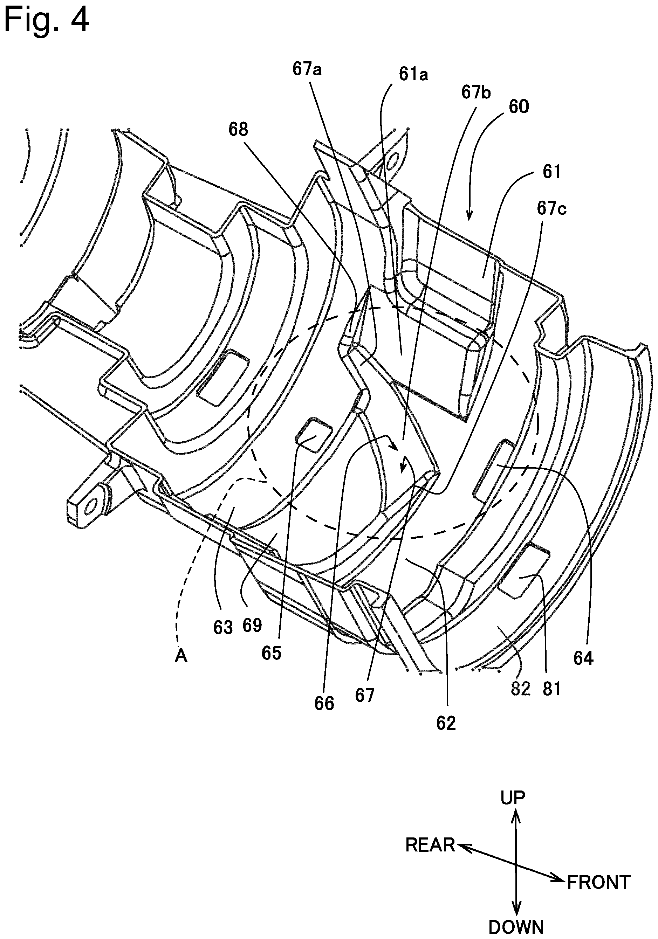

As shown in Figs. 4 through 6, the recessed portion 67 includes an inlet portion 67a provided at the lower part of the side wall portion 61a, which has a predetermined height from the bottom portion of the inner wall 61 at the side where the lubrication oil of the second gear wheel cover portion 63 in the inner wall 61 is scooped up at a radially outside of the second gear wheel 50. The recessed portion 67 is formed on a shaft cover portion 69 formed between the second gear wheel cover portion 63 and the first gear wheel cover portion 62 and is provided with a communication portion 67b which is in a fluid communication with the inlet portion 67a. The recessed portion 67 includes an outlet portion 67c at the downstream side which is in communication with the communication portion 67b and the first gear wheel cover portion 62.

In the second gear wheel cover portion 63, the descending sloped fluid passage 66 receives the lubrication oil which scooped height is lower among the lubrication oil scooped up by the rotation of the second gear wheel 50 at the inlet portion 67a. The lubrication oil received at the inlet portion 67a falls down to the communication portion 67b and further falls down through the communication portion 67b and finally flows into the first gear wheel cover portion 62 from the outlet portion 67c.

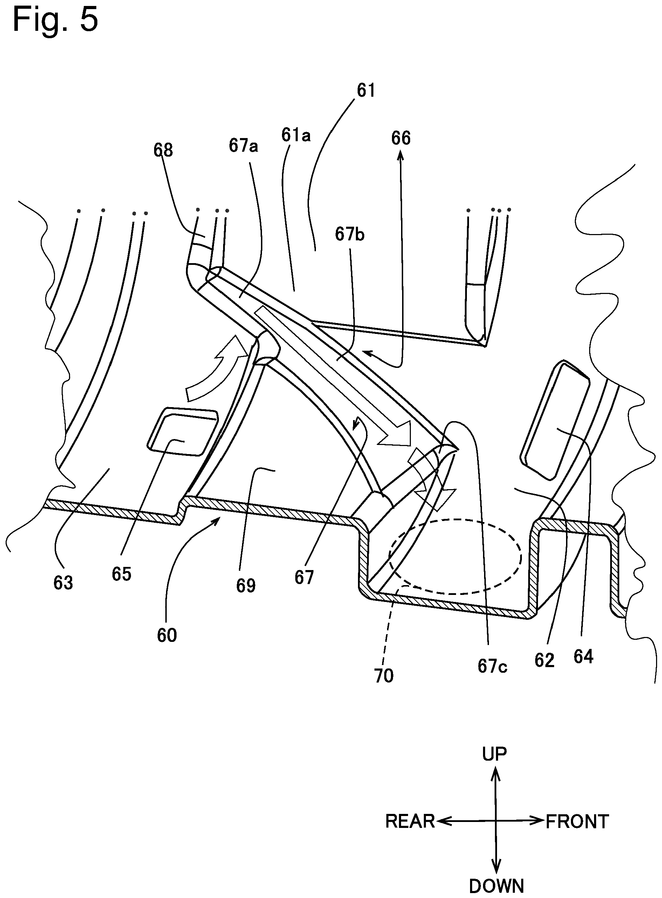

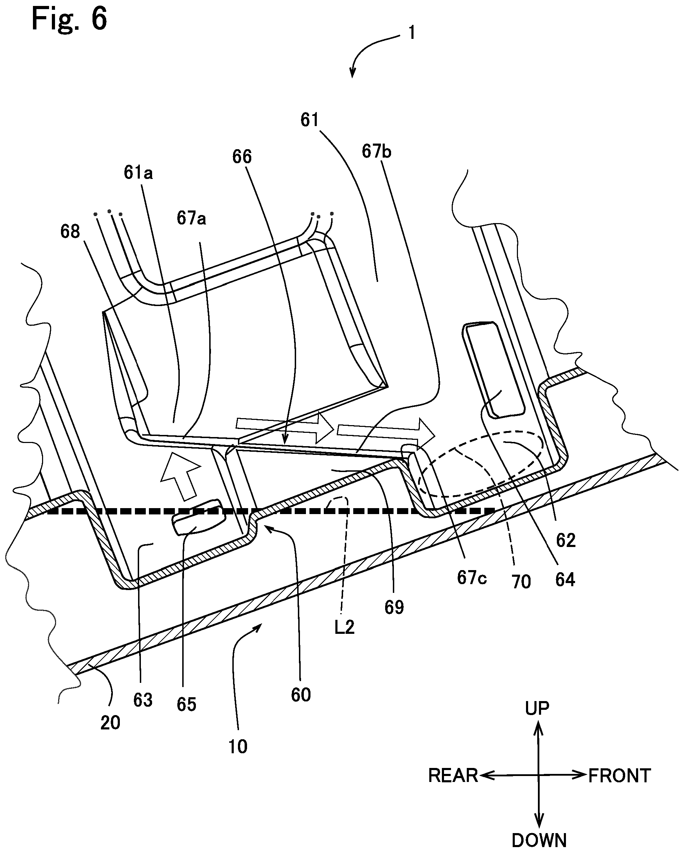

The lubrication oil scooped up by the second gear wheel 50 flows down, as indicated in the outlined arrows in Fig. 5, from the second gear wheel cover portion 63 into the first gear wheel cover portion 62 passing through the descending sloped fluid passage 66. The lubrication oil flown into the first gear wheel cover portion 62 and reserved therein via the descending sloped fluid passage 66 is designated with numeral 70. It is noted here that under the state that the oil surface of the lubrication oil in the casing 20 becomes L2 where the vehicle (transmission 1) is on the uphill road as indicated in Fig. 2, the lubrication oil can be flown into the first gear wheel cover portion 62 via the descending sloped fluid passage 66 as shown in Fig. 6. In more concrete, the descending sloped fluid passage 66 is formed to be inclined in gravity direction so that the lubricating oil in the second gear wheel cover portion 63 scooped up by the second gear wheel 50 is received by the descending sloped fluid passage 66 from the second gear wheel cover portion 63 to the first gear wheel cover portion 62.

The lubrication oil can be directly flown into the first gear wheel cover portion 62 from the second gear wheel cover portion 63 via the descending sloped fluid passage 66. Accordingly, when the transmission 1 arranged in a rear side lowered position is inclined at the rear side due to the vehicle (transmission in a rear side lowered arrangement) being on an uphill road, even the transmission 1 is inclined in a rear side, the lowering of the oil surface of the lubrication oil of the first gear wheel cover portion 62 positioned at an upper side relative to the second gear wheel cover portion 63, i.e., the lowering of the oil surface of the lubrication oil positioned at the front side of the separator 60 can be complemented. Thus, even the transmission 1 arranged in a rear side lowered arrangement is inclined in a rear side lowered position, the lubrication oil introduced into the first gear wheel cover portion 62 via the descending sloped fluid passage 66 can be scooped up to lubricate the lubrication necessary parts.

The lubricating device 10 for a transmission is provided with the second penetrating hole 65 at the bottom surface of the second gear wheel cover portion 63, as shown in Figs. 4 through 6 and the second penetrating hole 65 establishes a fluid communication between the inside of the oil separator 60 and the outside of the oil separator 60. This assures the guiding of the lubrication oil in the oil separator 60 to the second gear wheel cover portion 63 via the second penetrating hole 65, even the state that the transmission 1 is inclined in a rear side when the transmission 1 is on an uphill road, as shown in Fig. 6.

As shown in Figs. 3 through 6, the lubricating device 10 for a transmission includes, as shown in Figs. 3 through 6, the first penetrating hole 64 provided at an off-set position off-set upwardly from the bottom portion of the first gear wheel cover portion 62. Thus, lubrication oil flown into the first gear wheel cover portion 62 is prevented from flowing out via the first penetrating hole 64. Accordingly, the lubrication oil flown into the first gear wheel cover portion 62 via the descending sloped fluid passage 66 can be reserved therein.

The lubricating device 10 for a transmission is more preferably configured that when the first gear wheel 40 is positioned at the front side which is one side of the front side and the rear side of the power transmission shaft 30, the second gear wheel 50 is formed by a helical gear wheel, a tooth flank 50a of which is formed such that the side that the first gear wheel 40 is positioned, for example, as shown in Fig. 3, the front side in a front/rear direction (right/left direction as viewed in Fig. 3) of the power transmission shaft 30 is twisted from the rear side in a rotational direction towards front side. The rotational direction of the second gear wheel 50 is indicated with the arrow B in Fig. 3.

The inlet portion 67a of the recessed portion 67, preferably, as shown in Figs. 4 through 6, includes a wall surface 68 extending along in a peripheral direction of the second gear wheel 50 at the second gear wheel cover portion 63.

As explained above, the lubricating device 10 for a transmission is more preferably configured that when the first gear wheel 40 is positioned at the front side which is one side of the front side and the rear side of the power transmission shaft 30, the second gear wheel 50 is formed by the helical gear wheel, the tooth flank 50a of which is formed such that the side that the first gear wheel 40 is positioned, for example, as shown in Fig. 3, the front side in a front/rear direction (right/left direction as viewed in Fig. 3) of the power transmission shaft 30 is twisted from the rear side in a rotational direction towards front side. Accordingly, the lubrication oil scooped up by the rotation of the second gear wheel 50 in the arrow B direction is scattered onto the wall surface 68, generating a fluid flow towards the rear side of the power transmission shaft 30 (the other side of the front side and the rear side of the power transmission shaft 30). The oil scattered onto the wall surface 68 falls down along the wall surface 68 and reaches to the bottom surface of the recessed portion 67. Thus, since the fluid flow is generated at the lubrication oil scooped up by the rotation of the second gear wheel 50 and scattered towards the wall surface 68, the lubrication oil scooped up by the rotation of the second gear wheel 50 is received at the wall surface 68 and is introduced into the descending sloped fluid passage 66 in addition. Accordingly, the lubrication oil can be effectively introduced into the first gear wheel cover portion 62 from the second gear wheel cover portion 63. Since the second gear wheel 50 is formed by a helical gear wheel, each gear tooth becomes engaged with another tooth little by little to advantageously reduce the gear noise generated upon gear engaging.

The oil separator 60, as shown in Fig. 4, is configured to include a penetrating hole 81 which is positioned further front side of the oil separator 60 than the position of the first penetrating hole 64. The penetrating hole 81 is provided for introducing the lubrication oil into a cover portion 82 for covering a reverse speed gear wheel. The lubrication oil in the cover portion 82 scooped up by the reverse speed gear wheel lubricates the lubrication necessary portions which include the engaging portion of the reverse speed gear wheel. It is noted that since the reverse speed gear wheel is not frequently used on the uphill road, the load applied to the engaging portion of the reverse speed gear wheel is small and the necessity for lubrication is not so high. Accordingly, it is not necessary to particularly provide a descending sloped fluid passage 66 in the cover portion 82 for the reverse gear wheel in the oil separator 60 for introducing the lubrication oil, considering a case where the oil surface of the lubrication oil at the front side of the oil separator 60 is lowered to the level of oil surface L2, when the transmission 1 is on an uphill road.

It is noted that the lubricating device 10 for the transmission according to the invention is explained to be configured such that the first gear wheel 40 among the plurality of power transmission gear wheels is positioned at the front side which is one side of the front side and the rear side of the power transmission shaft 30 and according to this configuration, the lowering of oil surface of the lubrication oil in the first gear wheel cover portion 62 which is positioned at an upper side relative to the second gear wheel cover portion 63 can be complemented when the transmission 1 is inclined in a rear side lowered position on an uphill road.

However, the invention is not limited to this configuration and the lubricating device 10 for the transmission according to the invention can be modified which will be explained hereinafter so that the lowering of oil surface of the lubrication oil in the first gear wheel cover portion which is positioned at upper side relative to the second gear wheel cover portion can be complemented when the transmission 1 is inclined in a front side lowered position on a downhill road. It is noted that the lubrication oil moves towards the front side of the casing 20 by an inclination of the transmission 1 towards the front side lowered position in response to the inclination degree of the downhill road, when the transmission 1 is on the downhill road. Due to the movement of the lubrication oil towards the front side of the casing 20, the oil surface of the oil in the gear wheel cover portion positioned at the rear side of the power transmission shaft 30 becomes low.

The first gearwheel 40 among the plurality of power transmission gear wheels 40, 50 shown in Figs. 3 through 6 positions at the front side which is one side of the front side and the rear side of the power transmission shaft 30. However, instead of this structure, a power transmission gear wheel positioned at the rear side which is the one side of the front side and the rear side of the power transmission shaft 30 is selected as the first gear wheel 40 among the plurality of power transmission gear wheels which includes a plurality of power transmission gear wheels different from the power transmission gear wheels 40, 50. Regarding the second gear wheel 50, it is sufficient that a power transmission gear wheel positioned at the front side which is the other side of the front side and the rear side of the power transmission shaft 30 is selected as the second gear wheel 50. In such case, the other components or the parts of the lubricating device 10 for the transmission can be formed similar to those shown in Figs. 3 through 6. According to this structure, it is apparent that the lowering of the oil surface of the lubrication oil in the first gear wheel cover portion 62 positioned at the upper side relative to the second gear wheel cover portion 63 can be complemented similarly by providing the descending sloped fluid passage 66, when the transmission 1 is inclined in a front side lowered position on the downhill road.

Further, accompanying this, instead of the second gear wheel 50 which is formed by a helical gear wheel, the tooth flank 50a thereof being formed such that the front side which is the one side of the front side and the rear side of the power transmission shaft 30 is twisted from the front side which is the other side of the front side and the rear side of the power transmission shaft 30 in a rotational direction towards front side, the second gear wheel 50 is formed by a helical gear wheel, the tooth flank of which is formed such that the rear side which is the one side of the front side and the rear side of the power transmission shaft 30 is twisted from the front side which is the other side of the front side and the rear side of the power transmission shaft 30 in a rotational direction towards front side.

### (Effect of the Embodiment)

As explained, the lubricating device 10 for a transmission according to the embodiment includes a casing 20 in which a lubrication oil for the transmission 1 is sealed, a power transmission shaft 30 disposed along in a front/rear direction of the transmission 1 and supported in the casing 20 for transmitting power, a plurality of power transmission gear wheels 40, 50 arranged on the power transmission shaft 30 at positions different from each other in the front/rear direction of the power transmission shaft 30 and an oil separator 60 arranged at a lower side of the plurality of power transmission gear wheels 40, 50 along in the front/rear direction of the power transmission shaft 30 and having an inner wall 61. The oil separator 60 includes a first gear wheel cover portion 62 which encloses a lower side of a first gear wheel 40 among the plurality of power transmission gear wheels 40, 50 positioned at one side of a front side and a rear side of the power transmission shaft 30 and which reserves the lubrication oil scooped up by the first gear wheel 40 and falling down along the inner wall 61 of the oil separator 60, a second gear wheel cover portion 63 which encloses a lower part of a second gear wheel 50 among the plurality of power transmission gear wheels 40, 50 positioned at the other side of the front side and the rear side of the power transmission shaft 30 relative to the first gear wheel 40 and which reserves the lubrication oil scooped up by the second gear wheel 50 and falling down along the inner wall 61 of the oil separator 60 and a descending sloped fluid passage 66 which is provided on the inner wall 61 of the oil separator 60, sloped downward from the other side of the power transmission shaft 30 to the one side thereof, accepting a scooped lubrication oil scooped up by the second gear wheel 40 and introducing the scooped up lubrication oil into the first gear wheel cover portion 62. Thus, the lubrication oil is directly introduced from the second gear wheel cover portion 63 to the first gear wheel cover portion 62 by means of the descending sloped fluid passage 66 provided on the inner wall 61 of the oil separator 60. Accordingly, the lowering of the oil surface of the lubrication oil scooped up by the power transmission wheels 40, 50 can be complemented by the lubrication oil reserved inside of the oil separator 60. For example, when the vehicle is running on an uphill road and the transmission 1 is inclined to be positioned in a rear side lowered position or the vehicle is running on a downhill road and the transmission 1 is inclined to be positioned in a front side lowered position, the lowering of the oil surface of the lubrication oil at the first gear wheel cover portion 62 positioned at the upper side relative to the second gear wheel cover portion 63 can be complemented.

As explained above, the lubricating device 10 for a transmission according to the embodiment of the invention is provided with a second penetrating hole 65 which establishes a fluid communication between the inside of the oil separator 60 and the outside of the oil separator 60 at the bottom surface of the second gear wheel cover portion 63. This assures the introduction of the lubrication oil in the oil separator 60 into the second gear wheel cover portion 63 via the second penetrating hole 65 even the state that the transmission 1 is inclined in a rear side when the transmission 1 is on an uphill road.

The lubricating device 10 for a transmission according to the embodiment of the invention includes a first penetrating hole 64 provided at an off-set position off-set upwardly from the bottom portion of the first gear wheel cover portion 62. Thus, lubrication oil flown into the first gear wheel cover portion 62 is prevented from flowing out via the first penetrating hole 64. Accordingly, the lubrication oil flown into the first gear wheel cover portion 62 via the descending sloped fluid passage 66 can be reserved therein.

According to the lubricating device 10 for a transmission according to the embodiment of the invention, the second gear wheel 50 is a helical gear wheel which tooth flank 50a is formed such that the one side, at which the first gear wheel 40 is positioned, of the front side and the rear side of the power transmission shaft 30 is twisted from the other side of the front side and the rear side of the power transmission shaft 30 in the rotational direction towards front side and the descending sloped fluid passage 66 is formed on the bottom surface of the recessed portion 67 which is provided at a lower part of a side wall portion 61a of the oil separator 60 in a radially outward direction from the second gear wheel cover portion 63 over to the first gear wheel cover portion 62 and the recessed portion 67 includes a wall surface 68 formed in the second gear wheel cover portion 63 extending along in the peripheral direction of the second gear wheel 50. The lubrication oil scooped up by the second gear wheel 50 is scattered onto the wall surface 68 and falls down along the wall surface 68 to reach the bottom surface of the recessed portion 67. Thus, since the fluid flow is generated at the lubrication oil scooped up by the rotation of the second gear wheel 50 and scattered towards the wall surface 68, the lubrication oil scooped up by the rotation of the second gear wheel 50 is received at the wall surface 68 and is introduced into the descending sloped fluid passage 66 in addition. Accordingly, the lubrication oil can be effectively introduced into the first gear wheel cover portion 62 from the second gear wheel cover portion 63. Since the second gear wheel 50 is formed by a helical gear wheel, each gear tooth becomes engaged with another tooth little by little to advantageously reduce the gear noise generated upon engaging.

Further, when a plurality of embodiments exists, it is apparently possible to combine features of each embodiment, unless otherwise stated.

### [Reference Signs List]

1; transmission,
10; lubricating device for a transmission,
20; casing,
30; power transmission shaft,
40; first gear wheel (power transmission gear wheel),
50; second gear wheel (power transmission gear wheel),
50a; tooth flank,
60; oil separator;
61; inner wall,
61a; side wall portion,
62; first gear wheel cover portion,
63; second gear wheel cover portion,
64; first penetrating hole
65; second penetrating hole,
66; descending sloped fluid passage,
67; recessed portion,
68; wall surface.

## Claims

1. A lubricating device for a transmission, comprising:
a casing in which a lubrication oil for the transmission is sealed;
a power transmission shaft disposed along in a front/rear direction of the transmission and supported in the casing for transmitting power;
a plurality of power transmission gear wheels arranged on the power transmission shaft at positions different from each other in the front/rear direction of the power transmission shaft; and
an oil separator arranged at a lower side of the plurality of power transmission gear wheels along in the front/rear direction of the power transmission shaft and having an inner wall, wherein
the oil separator includes a first gear wheel cover portion which encloses a lower side of a first gear wheel among the plurality of power transmission gear wheels positioned at one side of a front side and a rear side of the power transmission shaft and which reserves the lubrication oil scooped up by the first gear wheel and falling down along the inner wall of the oil separator, a second gear wheel cover portion which encloses a lower part of a second gear wheel among the plurality of power transmission gear wheels positioned at the other side of the front side and the rear side of the power transmission shaft relative to the first gear wheel and which reserves the lubrication oil scooped up by the second gear wheel and falling down along the inner wall of the oil separator and a descending sloped fluid passage which is provided on the inner wall of the oil separator, sloped downward from the other side of the power transmission shaft to the one side thereof, accepting a scooped lubrication oil scooped up by the second gear wheel and introducing the scooped up lubrication oil into the first gear wheel cover portion.

2. The lubricating device for a transmission according to claim 1, wherein,
a second penetrating hole which establishes fluid communication between an inside and an outside of the oil separator is provided on a bottom portion of the second gear wheel cover portion.

3. The lubricating device for a transmission according to claim 1 or 2, wherein,
a first penetrating hole which establishes fluid communication between an inside of the oil separator and an outside of the oil separator is provided on a bottom portion of the first gear wheel cover portion at an off-set position off-set upwardly from the bottom portion.

4. The lubricating device for a transmission according to any one of claims 1 through 3, wherein,
the second gear wheel includes a helical gear wheel which tooth flank is formed such that the one side of the power transmission shaft is twisted from the other side thereof in a rotational direction towards front side;
the descending sloped fluid passage is provided on a bottom surface of a recessed portion which is formed at a lower part of a side wall portion of the inner wall of the oil separator at a radially outside of the second gear wheel from the second gear wheel cover portion over to the first gear wheel cover portion;
the recessed portion includes a wall surface formed at the second gear wheel cover portion and extending along in a peripheral direction of the second gearwheel; and wherein
the lubrication oil scooped up by the second gear wheel scatters onto the wall surface and falls down along the wall surface of the recessed portion to reach the bottom surface of the recessed portion.

## Amended claims

### Amended claims under Art. 19.1 PCT

1. (After Amendment) A lubricating device for a transmission, comprising:
a casing in which a lubrication oil for the transmission is sealed;
a power transmission shaft disposed along in a front/rear direction of the transmission and supported in the casing for transmitting power;
a plurality of power transmission gear wheels arranged on the power transmission shaft at positions different from each other in the front/rear direction of the power transmission shaft; and
an oil separator arranged at a lower side of the plurality of power transmission gear wheels along in the front/rear direction of the power transmission shaft and having an inner wall, wherein
the oil separator includes a first gear wheel cover portion which encloses a lower side of a first gear wheel among the plurality of power transmission gear wheels positioned at one side of a front side and a rear side of the power transmission shaft and which reserves the lubrication oil scooped up by the first gear wheel and falling down along the inner wall of the oil separator, a second gear wheel cover portion which encloses a lower part of a second gear wheel among the plurality of power transmission gear wheels positioned at the other side of the front side and the rear side of the power transmission shaft relative to the first gear wheel and which reserves the lubrication oil scooped up by the second gear wheel and falling down along the inner wall of the oil separator, a descending sloped fluid passage which is provided on the inner wall of the oil separator, sloped downward from the other side of the power transmission shaft to the one side thereof, accepting a scooped lubrication oil scooped up by the second gear wheel and introducing the scooped up lubrication oil into the first gear wheel cover portion; and a first penetrating hole which establishes fluid communication between an inside of the oil separator and an outside of the oil separator is provided on a bottom portion of the first gear wheel cover portion at an off-set position off-set upwardly from the bottom portion.

2. The lubricating device for a transmission according to claim 1, wherein,
a second penetrating hole which establishes fluid communication between an inside and an outside of the oil separator is provided on a bottom portion of the second gear wheel cover portion.

3. (Deleted)

4. (After Amendment) The lubricating device for a transmission according to claim 1 or 2, wherein,
the second gear wheel includes a helical gear wheel which tooth flank is formed such that the one side of the power transmission shaft is twisted from the other side thereof in a rotational direction towards front side;
the descending sloped fluid passage is provided on a bottom surface of a recessed portion which is formed at a lower part of a side wall portion of the inner wall of the oil separator at a radially outside of the second gear wheel from the second gear wheel cover portion over to the first gear wheel cover portion;
the recessed portion includes a wall surface formed at the second gear wheel cover portion and extending along in a peripheral direction of the second gearwheel; and wherein
the lubrication oil scooped up by the second gear wheel scatters onto the wall surface and falls down along the wall surface of the recessed portion to reach the bottom surface of the recessed portion.
